# EUROPÄISCHE PATENTANMELDUNG

(11) **EP 3 594 533 A1**
(43) Veröffentlichungstag der Anmeldung: **15.01.2020**
(21) Anmeldenummer: 19172940.9
(22) Anmeldetag: 07.05.2019
(51) Int. Cl.: F16H 57/038

(54) **GETRIEBE, ARBEITSAGGREGAT SOWIE VERFAHREN ZUR ÄNDERUNG EINER DREHZAHL EINES ARBEITSAGGREGATES**

(30) Priorität: 12.07.2018 DE 102018116884
(71) Anmelder: CLAAS Selbstfahrende Erntemaschinen GmbH, 33428 Harsewinkel (DE)
(72) Erfinder: Knierbein, Claudius, 59510 Lippetal-Herzfeld (DE); Schmidt, Christoph, 44388 Dortmund (DE)
(74) Vertreter: CLAAS Gruppe

(57) **Zusammenfassung**

Die vorliegende Erfindung betrifft ein Getriebe (20) zur Kraftübertragung von einer Antriebsvorrichtung auf ein Arbeitsaggregat einer landwirtschaftlichen Arbeitsmaschine (1), welches eine Drehzahl mit einem durch eine Kegelradanordnung bestimmten Übersetzungsverhältnis von einer ersten Welle (24) auf eine zweite Welle (25) überträgt, wobei die Kegelradanordnung ein erstes Kegelrad (27) und ein zweites Kegelrad (29) umfasst, wobei zu einer Änderung eines Übersetzungsverhältnisses des Getriebes (20) eine Auswechslung nur des ersten Kegelrades (27) durch ein anderes erstes Kegelrad (27a) mit einer abweichenden Zähnezahl vorgesehen ist.

## Beschreibung

Die vorliegende Erfindung betrifft ein Getriebe zur Kraftübertragung von einer Antriebsvorrichtung auf ein Arbeitsaggregat einer landwirtschaftlichen Arbeitsmaschine gemäß dem Oberbegriff des Anspruches 1. Weiterhin betrifft die vorliegende Erfindung ein Arbeitsaggregat für eine landwirtschaftliche Arbeitsmaschine sowie ein Verfahren zur Änderung einer Drehzahl eines Arbeitsaggregates.

Getriebe der eingangs genannten Art kommen zum Einsatz, um Arbeitsaggregate von landwirtschaftlichen Arbeitsmaschinen anzutreiben. Eine von einer Antriebsvorrichtung abgegebene Drehzahl wird entsprechend eines durch eine Kegelradanordnung bestimmten Übersetzungsverhältnisses von einer Eingangswelle auf eine Ausgangswelle übertragen. Dabei ist es oftmals erforderlich das Übersetzungsverhältnis durch einen manuellen Eingriff an geänderte Arbeitsbedingungen der Arbeitsmaschine anpassen zu können.

Aus der DE 34 11 672 A1 ist ein Getriebe der eingangs genannten Art, welches eine Kegelradanordnung umfasst. Das Getriebe dient der Kraftübertragung von einer Zapfwelle eines Schleppers auf eine Antriebswelle einer landwirtschaftlichen Maschine. Hierzu umfasst das Getriebe eine Eingangswelle und ein Ausgangswelle, die als aus einem Getriebegehäuse herausragende Wellenstummel ausgeführt sind. Die Eingangswelle und Ausgangswelle des Getriebes sind durch eine Kegelradanordnung trieblich miteinander verbunden, welches ein Übersetzungsverhältnis bestimmt. Um an der Ausgangswelle des Getriebes eine andere Drehzahl bereitstelle zu können, ist gemäß der DE 34 11 672 A1 vorgesehen, dass das Getriebe lösbar und umsteckbar an der Arbeitsmaschine angeordnet ist. Durch das Umstecken wird die bisherige Eingangswelle zur Ausgangswelle und die bisherige Ausgangswelle zur Eingangswelle. Auf diese Weise lassen sich zwei Drehzahlen an der Ausgangswelle bereitstellen.

Aus der DE 196 20 063 C2 ist ein Getriebe für ein Mähwerk bekannt. Das Getriebe umfasst eine Übersetzungsstufe mit veränderbarer Übersetzung, die aus zwei Kegelradanordnungen mit jeweils zwei Kegelrädern besteht. Den auf einer Ausgangswelle angeordneten Kegelrädern ist jeweils eine Schaltkupplung zugeordnet, um zwischen den beiden Kegelradanordnungen umschalten zu können, wodurch eine Änderung der Übersetzung realisiert wird.

Die aus dem Stand der Technik bekannten Getriebe zeichnen sich durch eine hohe Komplexität und geringe Flexibilität hinsichtlich der Veränderbarkeit der Drehzahl aus.

Somit liegt der Erfindung die Aufgabe zugrunde, ein Getriebe, ein Arbeitsaggregat sowie ein Verfahren zur Änderung einer Drehzahl eines Arbeitsaggregates einer landwirtschaftlichen Arbeitsmaschine bereitzustellen, welches sich durch einen einfacheren Aufbau und eine höhere Flexibilität in der Änderung der Drehzahl auszeichnet.

Diese Aufgabe wird erfindungsgemäß durch ein Getriebe gemäß dem Anspruch 1, ein Arbeitsaggregat gemäß dem Anspruch 7 sowie ein Verfahren zur Änderung einer Drehzahl eines Arbeitsaggregates gemäß dem Anspruch 13 gelöst.

Vorteilhafte Weiterbildungen der Erfindung sind Gegenstand der Unteransprüche.

Gemäß dem Anspruch 1 wird ein Getriebe zur Kraftübertragung von einer Antriebsvorrichtung auf ein Arbeitsaggregat einer landwirtschaftlichen Arbeitsmaschine vorgeschlagen. Das Getriebe überträgt eine Drehzahl mit einem durch eine Kegelradanordnung bestimmten Übersetzungsverhältnis von einer ersten Welle auf eine zweite Welle, wobei die Kegelradanordnung ein erstes Kegelrad und ein zweites Kegelrad umfasst. Erfindungsgemäß ist zu einer Änderung eines Übersetzungsverhältnisses des Getriebes eine Auswechslung nur des ersten Kegelrades durch ein anderes Kegelrad mit einer abweichenden Zähnezahl vorgesehen, während das zweite Kegelrad beibehalten bleibt. Eine Auswechslung stellt das physische Ersetzen des bestehenden ersten Kegelrades durch das andere erste Kegelrad mit einer abweichenden Zähnezahl dar. Das Kegelrad mit einer abweichenden Zähnezahl wird an Stelle des ersten Kegelrades auf die erste Welle montiert. Das Ändern des Übersetzungsverhältnisses durch das Auswechseln nur des ersten Kegelrades hat den Vorteil, dass gegenüber dem Stand der Technik die Anzahl der Komponenten des Getriebes reduziert wird. So kann auf eine Schaltvorrichtung verzichtet werden, wie sie aus der DE 196 20 063 C2 bekannt ist. Damit geht neben einer Gewichtsreduzierung auch eine Verringerung der Komplexität des Getriebes einher. Der Austausch selbst wird vereinfacht, da lediglich ein einzelnes Kegelrad ausgetauscht werden muss. Zudem entfällt dadurch das Einstellen der Kegelradverbindung, was beim Austausch eines Kegelradpaares erforderlich wird.

Dabei kann sich das erste Kegelrad von dem anderen ersten Kegelrad mit abweichender Zähnezahl durch eine unterschiedliche Zahndickensehne unterscheiden. Die Zahndickensehne bezeichnet den auf Höhe des Teil- oder Wälzkreises des Kegelrades gemessenen Abstand zwischen den Zahnflanken eines Zahnes. Für die Auswechselung des ersten Kegelrades können mehrere korrespondierende Kegelräder mit höherer und niedrigerer Zähnezahl bereitgestellt werden, die durch eine Anpassung der Zahngeometrie auf das zweite Kegelrad abgestimmt sind.

Vorzugsweise kann das erste Kegelrad als Tellerrad und das zweite Kegelrad als Kegelritzel ausgeführt sein.

Dabei kann zumindest das erste Kegelrad auf der ersten Welle lösbar angeordnet sein, die durch eine erste Lageranordnung in dem Gehäuse drehbar gelagert ist, während das zweite Kegelrad auf der zweiten Welle angeordnet ist, welche durch eine zweite Lageranordnung unter einem Winkel zu der ersten Welle in dem Gehäuse drehbar gelagert ist.

Insbesondere kann das erste Kegelrad am freien Ende der ersten Welle angeordnet sein, wobei sich das zweite Kegelrad zwischen dem ersten Kegelrad und der ersten Lagerstelle erstreckt. Dabei kann sich das zweite Kegelrad im Wesentlichen parallel zu der ersten Welle erstrecken bzw. unter dem Winkel zwischen der ersten Welle und der zweiten Welle.

Während das als Kegelritzel ausgeführte zweite Kegelrad zwischen der ersten Lagerstelle und dem ersten Kegelrad im Inneren des Gehäuses positioniert ist, kann das erste Kegelrad einer lösbaren Abdeckung des Gehäuses gegenüberliegend angeordnet sein. Hierdurch kann eine Zugänglichkeit zu dem ersten Kegelrad erreicht werden, welche einen Austausch lediglich des ersten Kegelrades ermöglicht. Dabei vereinfacht die Anordnung des ersten Kegelrades am freien Ende der ersten Welle den Austausch, da wegen der unmittelbaren Zugänglichkeit zu dem ersten Kegelrad ein Auftrennen einer trieblichen Verbindung der ersten Welle, beispielsweise mit einer Antriebswelle oder Abtriebswelle, entfällt. Aufgrund der Positionierung des zweiten Kegelrades zwischen dem ersten Kegelrad und der ersten Lagerstelle ist eine Auswechslung des zweiten Kegelrades aufwendiger, zumal die zweite Lagerstelle, mit welcher die zweite Welle im Gehäuse des Getriebes gelagert ist, demontiert werden muss. Außerdem muss hierfür eine triebliche Verbindung der zweiten Welle, beispielsweise mit einem angetriebenen Arbeitsaggregat oder einer Antriebswelle, unterbrochen werden, um das zweite Kegelrad auswechseln zu können. Somit ist der Austausch des als Tellerrad ausgeführten ersten Kegelrades einfacher, als der des als Kegelritzel ausgeführten zweiten Kegelrades.

Insbesondere können das als erstes Kegelrad ausgeführte Tellerrad und das als Kegelritzel ausgeführte zweite Kegelrad eine Geradverzahnung oder eine Schrägverzahnung aufweisen. Andere Ausgestaltungen der Verzahnungen des ersten und des zweiten Kegelrades sind ebenfalls denkbar, wie eine Epizykloiden-Bogenverzahnung, eine Hypoidverzahnung, eine Hypozykloidenverzahnung, eine verlängerte Evolventen-Bogenverzahnung, eine Kreisbogenverzahnung, eine Tangentenschrägverzahnung, eine Zyklo-Palloid-Verzahnung und/oder eine Gleason-Verzahnung.

Weiterhin wird die eingangs gestellte Aufgabe durch ein Arbeitsaggregat für eine landwirtschaftliche Arbeitsmaschine gelöst, welches durch eine Antriebsvorrichtung antreibbar ist, wobei zur Änderung einer Drehzahl mit der das Arbeitsaggregat antreibbar ist, zumindest ein Getriebe nach einem der Ansprüche 1 bis 6 vorgesehen ist.

Gemäß einer bevorzugten Weiterbildung kann das Arbeitsaggregat als ein Vorsatzgerät ausgeführt sein. Vorsatzgeräte für landwirtschaftliche Arbeitsmaschine können angetriebene Komponenten aufweisen, die in Abhängigkeit von einer vorliegenden Erntebedingung und/oder Erntegutart mit unterschiedlichen Drehzahlen betrieben werden sollen. Der Einsatz des erfindungsgemäßen Getriebes ermöglicht eine einfache Änderung der Drehzahl der angetriebenen Komponente des Vorsatzgerätes durch den Austausch des ersten Kegelrades gegen ein Kegelrad mit abweichender Zähnezahl.

Insbesondere kann das das Vorsatzgerät als ein Schneidwerk oder ein Maispflücker ausgeführt sein. Bei einem als Schneidwerk ausgeführten Vorsatzgerät kann das Getriebe dem Antrieb einer Mähvorrichtung dienen, deren Antriebsdrehzahl durch eine Variation des Übersetzungsverhältnisses durch den Austausch des ersten Kegelrades erreicht wird. So kann bei dichtem Erntegutbestand und/oder bei geringer Fahrgeschwindigkeit während des Erntevorgangs mit einer niedrigeren Drehzahl gearbeitet werden. Hingegen kann bei geringer Bestandsdichte und/oder hoher Fahrgeschwindigkeit während des Erntevorgangs mit einer höheren Drehzahl gearbeitet werden. Bei einem als Maispflücker ausgeführten Vorsatzgerät kann das Getriebe dem Antrieb von unterhalb von Pflückeinheiten des Maispflückers angeordneten Häckselvorrichtungen dienen. Die Häckselvorrichtungen werden im Allgemeinen mit einer konstanten Drehzahl angetrieben, jedoch kann es aufgrund unterschiedlicher Erntebedingungen erforderlich sein, mit unterschiedlichen Drehzahlniveaus zu arbeiten. Durch den Austausch des ersten Kegelrades lassen sich die verschiedenen Übersetzungsverhältnisse darstellen. Ebenfalls denkbar ist der Einsatz des erfindungsgemäßen Getriebes als Antrieb für Pflückwalzen der Pflückeinheiten.

Weiterhin kann das Arbeitsaggregat als eine Dreschtrommel der Arbeitsmaschine ausgeführt sein. Bei einer Ausführung der Arbeitsmaschine als Mähdrescher umfasst dieser ein Dreschwerk mit zumindest einer Dreschtrommel. Für das Erzielen einer guten Druschleistung ist eine Variation der Antriebsdrehzahl der zumindest einen Dreschtrommel in Abhängigkeit vom zu verarbeitenden Erntegut und dessen Beschaffenheit sinnvoll. Das erfindungsgemäße Getriebe ermöglicht eine Drehzahländerung mit geringem manuellem Aufwand.

Des Weiteren wird zur Lösung der eingangs gestellten Aufgabe ein Verfahren gemäß dem unabhängigen Anspruch 13 vorgeschlagen.

Gemäß dem Anspruch 13 wird ein Verfahren zur Änderung einer Drehzahl eines Arbeitsaggregates einer landwirtschaftlichen Arbeitsmaschine vorgeschlagen, wobei eine Drehzahl mit einem durch eine Kegelradanordnung bestimmten Übersetzungsverhältnis durch ein Getriebe zur Kraftübertragung von einer Antriebsvorrichtung auf das Arbeitsaggregat übertragen wird, wobei die Kegelradanordnung ein erstes Kegelrad und ein zweites Kegelrad umfasst. Zur Änderung des Übersetzungsverhältnisses des Getriebes ist vorgesehen, dass nur das erste Kegelrad durch ein anderes erstes Kegelrad mit einer abweichenden Zähnezahl ausgetauscht wird, während das zweite Kegelrad beibehalten wird. Durch eine Ausführung des ersten Kegelrades als Tellerrad und des zweiten Kegelrades als Kegelritzel wird der Vorgang des Austauschens vereinfacht, indem das als Tellerrad ausgeführte erste Kegelrad am freien Ende einer im Gehäuse des Getriebes gelagerten, ersten Welle lösbar angeordnet wird. Das freie Ende der ersten Welle wird durch eine lösbar an dem Gehäuse angeordnete Abdeckung frei zugänglich, so dass das zweite Kegelrad in axialer Richtung von der ersten Welle abziehbar ist, ohne die erste Welle von einer daran angeschlossenen Antriebs- oder Abtriebswelle lösen zu müssen. Ein für den Austausch mit dem ersten Kegelrad vorgesehenes anderes erstes Kegelrad wird neben einer abweichenden Zähnezahl mit einer unterschiedlichen Zahndickensehne ausgeführt, um mit dem im Getriebe verbleibenden zweiten Kegelrad zusammenwirken zu können.

Die vorliegende Erfindung wird nachstehend anhand eines in den Zeichnungen dargestellten Ausführungsbeispieles näher erläutert.

Es zeigen:
- Fig. 1: eine schematische Darstellung einer als Mähdrescher ausgeführten landwirtschaftlichen Arbeitsmaschine;
- Fig. 2: eine perspektivische Darstellung eines Getriebes mit Gehäuse;
- Fig. 3: eine perspektivische Darstellung des Getriebes mit geöffnetem Gehäuse;
- Fig. 4: eine schematische Darstellung des Getriebes gemäß Fig. 2 ohne das umgebende Gehäuse;
- Fig. 5: eine schematische Darstellung eines ersten Kegelrades und eines weiteren ersten Kegelrades mit einer abweichenden Zähnezahl.

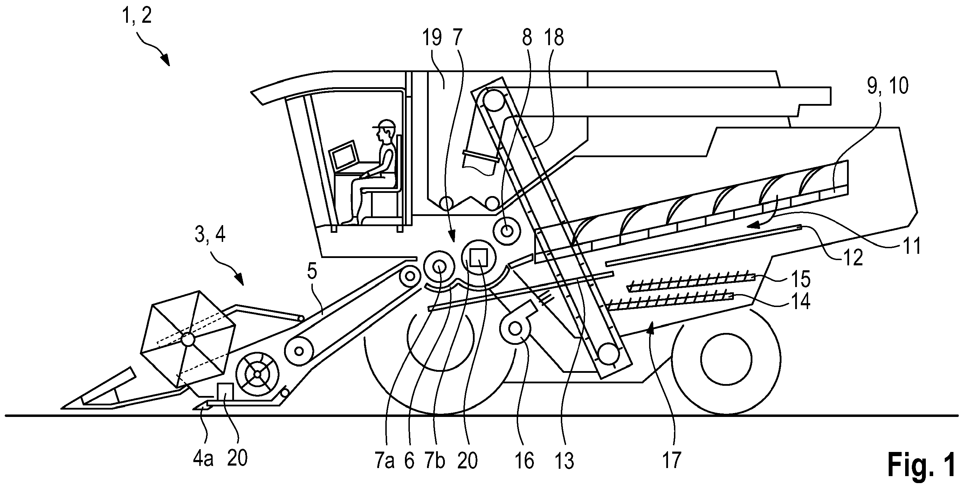

Die in Fig. 1 schematisch dargestellte, als Mähdrescher 2 ausgeführte landwirtschaftliche Arbeitsmaschine 1 nimmt in ihrem frontseitigen Bereich ein als Getreideschneidwerk 4 ausgeführtes Vorsatzgerät 3 auf, welches in an sich bekannter Weise mit einem Schrägförderer 5 des Mähdreschers 2 verbunden ist. Das Schneidwerk 4 weist eine Mäheinrichtung mit einem oszillierend angetriebenen Messerbalken 4a auf. Der den Schrägförderer 5 durchlaufende Erntegutstrom wird in dem obenseitigen, rückwärtigen Bereich des Schrägförderers 5 an die untenseitig zumindest teilweise von einem sogenannten Dreschkorb 6 ummantelten Dreschorgane 7 des Mähdreschers 2 übergeben. Die Dreschorgane 7 umfassen eine Vorbeschleunigertrommel 7a sowie eine Dreschtrommel 7b. Eine den Dreschorganen 7 nachgeordnete Umlenktrommel 8 lenkt den im rückwärtigen Bereich der Dreschorgane 7 aus diesen austretenden Gutstrom so um, dass er unmittelbar an eine als Trennrotor 9 ausgeführte Abscheideeinrichtung 10 übergeben wird. In dem rotierenden Trennrotor 9 wird der Gutstrom in axialer Richtung so gefördert, dass in dem Gutstrom enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Abscheideeinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels eines Elevators 18 an einen Korntank 19 übergeben.

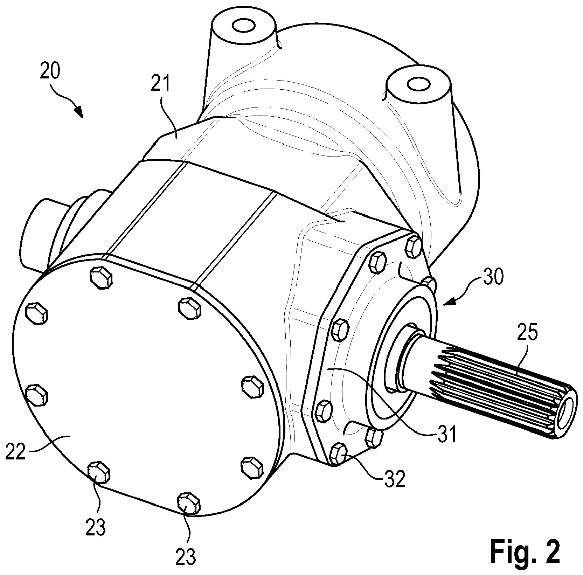

Der Antrieb des Messerbalkens 4a des Schneidwerkes 4 erfolgt mittels eines Getriebes 20, insbesondere eines Winkelgetriebes, welches nachfolgend anhand der Fig. 2 bis 5 näher beschrieben wird. Weiterhin kann für den Antrieb zumindest eines der Dreschorgane 7, insbesondere die Dreschtrommel 7b, ein weiteres Getriebe 20 vorgesehen sein. Die Getriebe 20 ermöglichen es durch einen einfachen manuellen Eingriff die Antriebsdrehzahl des Messerbalkens 4a oder der Dreschtrommel 7b bei Bedarf zu variieren, um eine Anpassung an geänderte Erntebedingungen zu ermöglichen. Als ein Vorsatzgerät 3 für den Mähdrescher 2 kann auch ein Maispflücker zum Einsatz kommen. Dieser weist unterhalb von Pflückeinheiten des Maispflückers angeordnete Häckselvorrichtungen auf, die jeweils durch ein diesen zugeordnetes Getriebe 20 antreibbar sind. Für die Änderung der Antriebsdrehzahl des Messerbalkens 4a oder der Dreschtrommel 7b ist der Austausch nur des ersten Kegelrades 27 durch ein anderes erstes Kegelrad 27a mit einer abweichenden Zähnezahl vorgesehen, woraus unterschiedliche Übersetzungsverhältnisse der Getriebe 20 resultieren.

In Fig. 2 ist eine perspektivische Darstellung des Getriebes 20 dargestellt. Das Getriebe 20 ist als Winkelgetriebe ausgeführt und weist ein Gehäuse 21 auf. Das Gehäuse 21 ist stirnseitig durch eine Abdeckung 22, wie eine Abdeckplatte, verschlossen. Die Abdeckung 22 ist mittels Schraubverbindungen 23 lösbar an dem Gehäuse 21 befestigt. Das Gehäuse 21 weist eine erste Welle 24 auf, welche als Eingangswelle oder Ausgangswelle ausgeführt sein kann. Unter einem Winkel, insbesondere von etwa 90° zur Längsachse des Gehäuses 21, ragt eine zweite Welle 25 aus dem Gehäuse 21 hervor, welche als Ausgangswelle oder Eingangswelle ausgeführt sein kann. Die zweite Welle 25 ist in einer Lageranordnung 30 drehbar gelagert. Die Lageranordnung 30 weist ein Lagergehäuse 31 auf, welches der Aufnahme von Wälzlagern zur Lagerung der zweiten Welle 25 dient. Das Lagergehäuse 31 ist mittels Schraubverbindungen 32 an dem Gehäuse 21 lösbar befestigt. An der zweiten Welle 25 ist eine Antriebsdrehzahl für den Antrieb des Messerbalkens 4a bzw. der Dreschtrommel 7b abgreifbar.

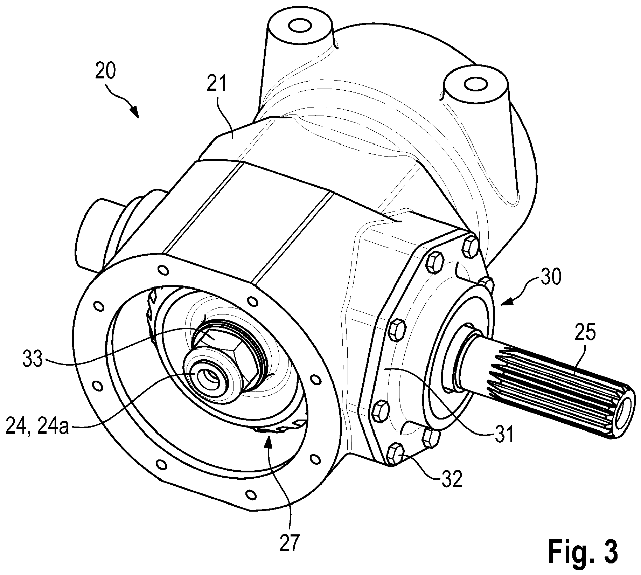

Fig. 3 zeigt eine perspektivische Darstellung des Getriebes 20 mit geöffnetem Gehäuse 21. Hierzu ist das Gehäuse 21 ohne die Abdeckung 22 dargestellt. Der Abdeckung 22 gegenüberliegend befindet sich ein erstes Kegelrad 27, welches an einem freien Ende 24a der ersten Welle 24 lösbar angeordnet ist. Eine Kontermutter 31 sichert das erste Kegelrad 27 gegen eine axiale Bewegung.

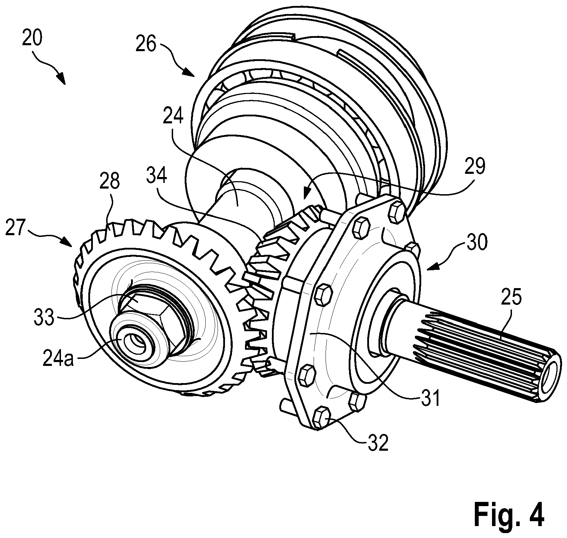

Die Darstellung in Fig. 4 zeigt eine schematische Darstellung des Getriebes 20 gemäß Fig. 2 ohne das umgebende Gehäuse 21. Die beispielhaft als Eingangswelle ausgeführte erste Welle 24 ist mittels einer ersten Lageranordnung 26 in dem Gehäuse 21 drehbar gelagert. Die erste Welle 24 kann im Fall der Anordnung am Vorsatzgerät 3 mit einer - nicht dargestellten - Vorgelegewelle oder Gelenkwelle trieblich verbunden sein. An dem freien Ende 24a der ersten Welle 24 ist das erste Kegelrad 27 mit einer ersten Anzahl an Zähnen 28 angeordnet. Das erste Kegelrad 27 ist als sogenanntes Tellerrad ausgebildet. Das erste Kegelrad 27 ist lösbar auf der ersten Welle 24 angeordnet.

Das erste Kegelrad 27 kämmt mit einem zweiten Kegelrad 29, welches als Kegelritzel ausgebildet ist. Das als Kegelritzel ausgebildete zweite Kegelrad 29 ist auf der zweiten, beispielhaft als Ausgangswelle ausgebildeten, Welle 25 angeordnet, welche durch die zweite Lageranordnung 30 in dem Gehäuse 21 drehbar gelagert ist. Das zweite Kegelrad 29 weist Zähne 34 auf. Die Anzahl der Zähne 28 des ersten Kegelrades 27 und der Zähne 34 des zweiten Kegelrades 29 ist aufeinander abgestimmt, um ein für den Antrieb von Arbeitsaggregaten, wie den Messerbalken 5a oder die Dreschtrommel 7b, der Erntemaschine 1 bestimmtes Übersetzungsverhältnis zu erreichen. Die erste Welle 24 und die zweite Welle 25 sind unter einem Winkel versetzt zueinander angeordnet. Dabei erstreckt sich das zweite Kegelrad 29 zwischen der ersten Lagerstelle 26 und dem ersten Kegelrad 27. Die zweite Lagerstelle 30 ist entsprechend zwischen dem zweiten Kegelrad 29 und der Wandung des Gehäuses 21 angeordnet.

Das erste Kegelrad 27 ist der Abdeckung 22 gegenüberliegend am freien Ende 24a der ersten Welle 24 angeordnet. Die Kontermutter 31 sichert das erste Kegelrad 27 gegen eine axiale Bewegung entlang der ersten Welle 24 und ermöglicht auch das Lösen des ersten Kegelrades 27 von der ersten Welle 24. Diese der lösbaren Abdeckung 22 gegenüberliegende Anordnung des ersten Kegelrades 27 ermöglicht eine einfache Zugänglichkeit für den Austausch des ersten Kegelrades 27 gegen ein anderes erstes Kegelrad 27a mit einer abweichenden Zähnezahl, indem lediglich die Abdeckung 22 von dem Gehäuse 21 gelöst werden muss. Nach dem Lösen der Kontermutter 33 kann das erste Kegelrad 27 von der ersten Welle 24 abgezogen werden. Das Auswechseln des zweiten Kegelrades 29 gestaltet sich aufwendiger, da zunächst ein mit der zweiten Welle 25 trieblich verbundenes Arbeitsaggregat, wie der Messerbalken 5a oder die Dreschtrommel 7b, von der zweiten Welle 25 gelöst werden müssen, um anschließend das zweite Kegelrad 29 mitsamt der zweiten Lageranordnung 30 und der darin gelagerten zweiten Welle 25 von dem Gehäuse 21 lösen zu können.

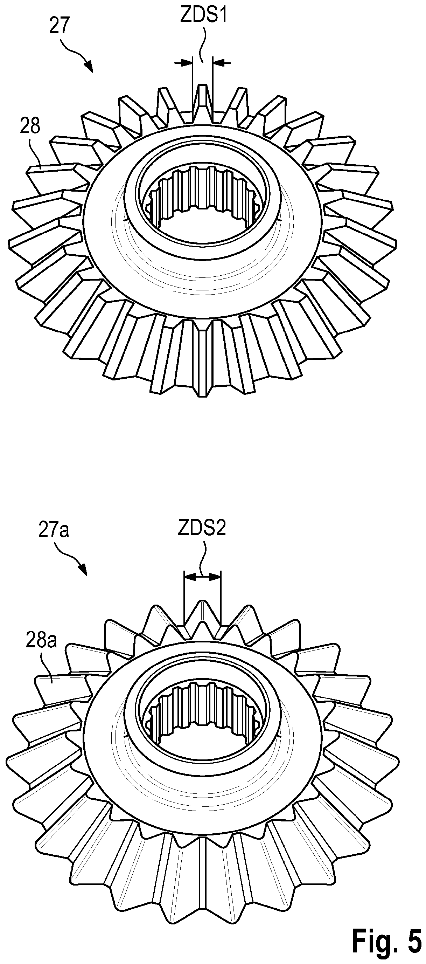

In Fig. 5 ist eine schematische Darstellung des ersten Kegelrades 27 mit einer ersten Anzahl an Zähnen 28 und eines weiteren ersten Kegelrades 27a mit einer abweichenden Anzahl an Zähnen 28a dargestellt. Die Abweichung der Zähneanzahl des für den Austausch vorgesehenen ersten Kegelrades 27a kann entsprechend der angestrebten Übersetzung durch das Getriebe 20 größer oder kleiner als die Anzahl der Zähne 28 des ersten Kegelrades 27 sein. Neben der abweichenden Anzahl von Zähnen 28 bzw. 28a unterscheidet sich das erste Kegelrad 27 von dem anderen ersten Kegelrad 27a durch eine unterschiedliche Zahndickensehne ZDS1 bzw. ZDS2. Die Zahndickensehne ZDS1, ZDS2 bezeichnet den auf Höhe des Teil- oder Wälzkreises des jeweiligen Kegelrades 27 bzw. 27a gemessenen Abstand zwischen den Zahnflanken eines Zahnes 28 bzw. 28a. Für die Auswechselung des ersten Kegelrades 27 können mehrere Kegelräder 27a mit höherer und niedrigerer Zähnezahl bereitgestellt werden, deren Zahngeometrie durch eine Anpassung der Zahndickensehne ZDS1 bzw. ZDS2 auf das zweite Kegelrad 29 abgestimmt ist.

**Bezugszeichenliste**

| | | | |
|---|---|---|---|
| 1 | Erntemaschine | 27 | Erstes Kegelrad |
| 2 | Mähdrescher | 27a | Erstes Kegelrad |
| 3 | Vorsatzgerät | 28 | Zahn |
| 4 | Schneidwerk | 28a | Zahn |
| 4a | Messerbalken | 29 | Zweites Kegelrad |
| 5 | Schrägförderer | 30 | Zweite Lageranordnung |
| 6 | Dreschkorb | 31 | Lagergehäuse |
| 7 | Dreschorgane | 32 | Schraubverbindung |
| 7a | Vorbeschleunigertrommel | 33 | Kontermutter |
| 7b | Dreschtrommel | 34 | Zahn |
| 8 | Umlenktrommel | | |
| 9 | Trennrotor | ZDS1 | Zahndickensehne |
| 10 | Abscheideeinrichtung | ZDS2 | Zahndickensehne |
| 11 | Körner | | |
| 12 | Rücklaufboden | | |
| 13 | Zuführboden | | |
| 14 | Siebebene | | |
| 15 | Siebebene | | |
| 16 | Gebläse | | |
| 17 | Reinigungseinrichtung | | |
| 18 | Elevator | | |
| 19 | Korntank | | |
| 20 | Getriebe | | |
| 21 | Gehäuse | | |
| 22 | Abdeckung | | |
| 23 | Schraubverbindung | | |
| 24 | Erste Welle | | |
| 24a | Freies Ende von 24 | | |
| 25 | Zweite Welle | | |
| 26 | Erste Lageranordnung | | |

## Patentansprüche

1. Getriebe (20) zur Kraftübertragung von einer Antriebsvorrichtung auf ein Arbeitsaggregat einer landwirtschaftlichen Arbeitsmaschine (1), welches eine Drehzahl mit einem durch eine Kegelradanordnung bestimmten Übersetzungsverhältnis von einer ersten Welle (24) auf eine zweite Welle (25) überträgt, wobei die Kegelradanordnung ein erstes Kegelrad (27) und ein zweites Kegelrad (29) umfasst, **dadurch gekennzeichnet, dass** zu einer Änderung eines Übersetzungsverhältnisses des Getriebes (20) eine Auswechslung nur des ersten Kegelrades (27) durch ein anderes erstes Kegelrad (27a) mit einer abweichenden Zähnezahl vorgesehen ist.

2. Getriebe (20) nach Anspruch 1, **dadurch gekennzeichnet, dass** sich das erste Kegelrad (27) von dem anderen ersten Kegelrad (27a) mit abweichender Zähnezahl durch eine unterschiedliche Zahndickensehne (ZDS1, ZDS2) unterscheidet.

3. Getriebe (20) nach Anspruch 1 oder 2, **dadurch gekennzeichnet, dass** das erste Kegelrad (27, 27a) als Tellerrad und das zweite Kegelrad (29) als Kegelritzel ausgeführt ist.

4. Getriebe (20) nach einem der Ansprüche 1 bis 3, **dadurch gekennzeichnet, dass** zumindest das erste Kegelrad (27, 27a) auf der ersten Welle (24) lösbar angeordnet ist, die durch eine erste Lageranordnung (26) in einem Gehäuse (21) des Getriebes (20) drehbar gelagert ist, während das zweite Kegelrad (29) auf der zweiten Welle (25) angeordnet ist, welche durch eine zweite Lageranordnung (30) unter einem Winkel zu der ersten Welle (24) in dem Gehäuse (21) drehbar gelagert ist.

5. Getriebe (20) nach Anspruch 4, **dadurch gekennzeichnet, dass** das erste Kegelrad (27, 27a) am freien Ende (24a) der ersten Welle (24) angeordnet ist, wobei sich das zweite Kegelrad (29) zwischen dem ersten Kegelrad (27) und der ersten Lageranordnung (26) erstreckt.

6. Getriebe (20) nach einem der Ansprüche 1 bis 5, **dadurch gekennzeichnet, dass** das erste Kegelrad (27, 27a) und das zweite Kegelrad (29) als geradverzahnte oder schrägverzahnte Kegelräder ausgeführt sind.

7. Arbeitsaggregat (3,4, 7) für eine landwirtschaftliche Arbeitsmaschine (1, 2), welches durch eine Antriebsvorrichtung antreibbar ist, **dadurch gekennzeichnet, dass** zur Änderung einer Drehzahl mit der das Arbeitsaggregat (3, 4, 7) antreibbar ist, zumindest ein Getriebe (20) nach einem der Ansprüche 1 bis 6 vorgesehen ist.

8. Arbeitsaggregat (3, 4, 7) nach Anspruch 7, **dadurch gekennzeichnet, dass** das Arbeitsaggregat als ein Vorsatzgerät (3, 4) ausgeführt ist.

9. Arbeitsaggregat (3, 4, 7) nach Anspruch 8, **dadurch gekennzeichnet, dass** das Vorsatzgerät (3) als ein Schneidwerk (4) oder ein Maispflücker ausgeführt ist.

10. Arbeitsaggregat (3, 4, 7) nach Anspruch 9, **dadurch gekennzeichnet, dass** das zumindest eine Getriebe (20) dem Antrieb einer Mähvorrichtung des Schneidwerkes (4) dient.

11. Arbeitsaggregat (3, 4, 7) nach Anspruch 8, **dadurch gekennzeichnet, dass** das zumindest eine Getriebe (20) dem Antrieb zumindest einer Pflückvorrichtung des Maispflückers dient.

12. Arbeitsaggregat (3, 4, 7) nach Anspruch 7, **dadurch gekennzeichnet, dass** das Arbeitsaggregat als eine Dreschtrommel (7b) der Arbeitsmaschine (1, 2) ausgeführt ist.

13. Verfahren zur Änderung einer Drehzahl eines Arbeitsaggregates (3, 4, 7) einer landwirtschaftlichen Arbeitsmaschine (1, 2), wobei eine Drehzahl mit einem durch eine Kegelradanordnung bestimmten Übersetzungsverhältnis durch ein Getriebe (20) zur Kraftübertragung von einer Antriebsvorrichtung auf das Arbeitsaggregat (3, 4, 7) übertragen wird, wobei die Kegelradanordnung ein erstes Kegelrad (27) und ein zweites Kegelrad (29) umfasst, **dadurch gekennzeichnet, dass** das zur Änderung des Übersetzungsverhältnisses des Getriebes (20) nur das erste Kegelrad (20) durch ein anderes erstes Kegelrad (27a) mit einer abweichenden Zähnezahl ausgetauscht und das zweite Kegelrad (29) unverändert beibehalten wird.
